# EUROPEAN PATENT APPLICATION

(11) **EP 2 551 196 A1**
(43) Date of publication of application: **30.01.2013**
(21) Application number: 12177874.0
(22) Date of filing: 25.07.2012
(51) Int. Cl.: B64D 25/04, B60R 21/207

(54) **Airbag module on seat back**

(30) Priority: 27.07.2011 US 201161512070 P
(71) Applicant: Zodiac Aerospace, 36100 Issoudun (FR)
(72) Inventor: Islam , Rakibul, rancho Cucamonga, CA 91730 (US)
(74) Representative: Hammler, Martin Franz

(57) **Abstract**

Disclosed are airbag modules (10) for a passenger seat(14) having a seat back (18), a container (20) coupled to the seat back: wherein the container includes at least one airbag (12) in an undeployed state, and a structure (44) positioned aft of the seat back, wherein the structure includes a recess or opening (52) configured to receive the at least one airbag in a deployed state; structure may have a breakable area (56) positioned aft of the recess; wherein breakable area is configured to form an opening in a structure aft surface (50); when a force is applied by the at least one airbag in a deployed state.

## Description

### FIELD OF THE INVENTION

The invention relates to airbags for passenger seats or the like.

### BACKGROUND

In various modes of transportation, many passenger seats are at least partially surrounded by walls or monuments or may be placed behind other passenger seats where items are mounted to the seat back, such as video displays, telephones, shrouds, or other items.

During a minor crash landing, a passenger may be thrown forward so that the passenger's head and/or body strikes these structures due to inertial loads from the event. Typically, these structures are rigid in nature, so as not to provide any energy absorbing or deflecting features. As a result, passengers may experience head injuries due to impact with these conventional seat back or structural designs.

Thus, it may be desirable to provide structures with airbag modules within a potential strike zone to provide a surface with energy absorbing features so as to reduce the severity of potential head injuries that passengers may experience during a minor crash.

### STATEMENT OF INVENTION

An aircraft module and embodiments thereof in accordance with the present invention is defined by the appended claims.

### SUMMARY OF THE INVENTION

Features of the present invention include an airbag module for a passenger seat comprising a seat back, a container coupled to the seat back, wherein the container comprises at least one airbag, and a structure positioned aft of the seat back, wherein the structure comprises a recess configured to receive the at least one airbag in a deployed state. The container may further comprise a cover having a breakable line, and the structure further comprises a breakable area positioned aft of the recess, wherein the breakable line is configured to form an opening in the cover and the breakable area is configured to form an opening in the aft surface when a force is applied by the at least one airbag in a deployed state.

In certain features, the breakable area may be pivotally coupled to a portion of an aft surface of the structure, and the recess may comprise a stop to prevent the breakable area from rotating forward past the stop.

The structure may further comprise a film that is positioned to cover at least the breakable area. The breakable area may comprise a decorative pattern on an aft surface of the structure. The recess may be configured to guide the at least one airbag in the deployed state through the structure.

### BRIEF DESCRIPTION OF THE DRAWINGS

Figure 1 is a rear perspective view showing a passenger seat with an airbag module according to certain features of the present invention.
Figure 2A is a side view of the passenger seat of Figure 1 positioned forward of a structure with a recess positioned adjacent the airbag module in an undeployed state.
Figure 2B is a partial cross-sectional view of the recess within the structure of Figure 2A and a breakable area positioned aft of the recess.
Figure 2C is a partial cross-sectional view of the recess of Figure 2B with the airbag module in a deployed state passing through the breakable area.
Figure 3 is a partial cross-sectional view of a recess within the structure of Figure 2A and a breakable area according to certain features of the present invention.
Figure 4 is a perspective view of a breakable area according to certain features of the present invention.
Figure 5 is a side view of a passenger seated aft of the passenger seat of Figure 2A with the airbag module in an undeployed state.
Figure 6 is a side view of the passenger seated aft of the passenger seat of Figure 5 with the passenger's head contacting the airbag in a deployed state.

### DETAILED DESCRIPTION

The described features of the invention provide airbag modules for passenger seats. While the airbag modules are discussed for use with aircraft seats, they are by no means so limited. Rather, features of the active seat backs may be used in passenger seats or other seats of any type or otherwise as desired.

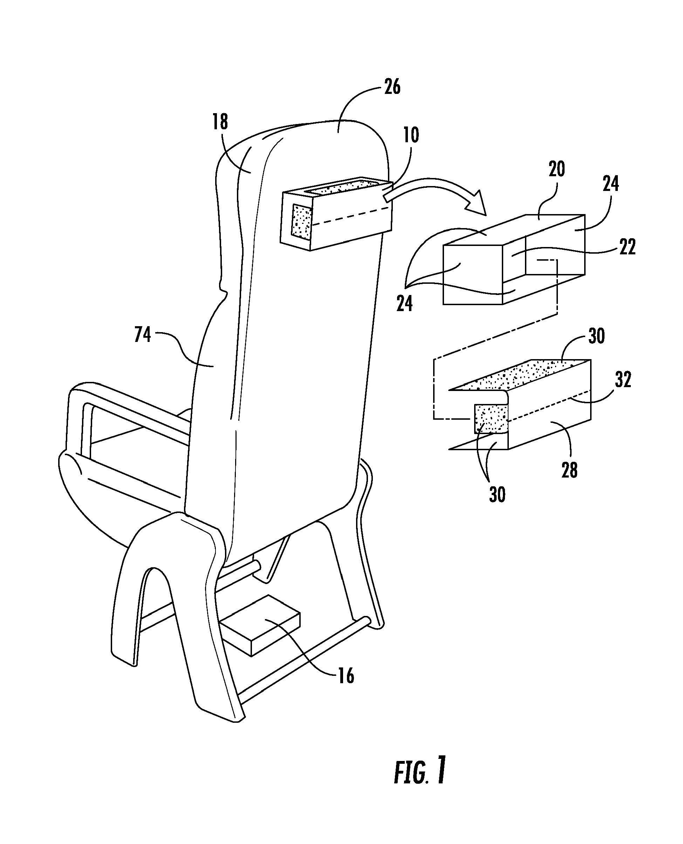

Figures 1-6 illustrate features of an airbag module 10. In these features, the airbag module 10 comprises at least one airbag 12, an inflator 14, at least one sensing circuit 16, and a seat back 18.

The airbag 12 may be formed of a thin, nylon fabric or other suitable flexible materials. In some features, the airbag 12 may include a rectilinear, oval, circular, or other overall deployed shape as needed for the location where the airbag module 10 is mounted. The airbag 12 may further comprise vent locations to assist with airbag deflation.

As best illustrated in Figure 1, a container 20 may be used to house the airbag 12 in an undeployed state. The container 20 may comprise a back surface 22 and sides 24, wherein the back surface 22 may be positioned within and/or attached to an aft surface 26 of the seat back 18. The container 20 may be formed of composite materials, plastics, metals, or other suitable materials. Suitable locations for attaching the container 20 within and/or on the aft surface 26 of the seat back 18 may include potential head or body strike areas.

A cover 28 may positioned over the container 20 opposite the back surface 22. The cover 28 may include tabs 30 that may extend forward to attach to the sides 24 of the container 20 to secure the cover 28 to the container 20. The cover 28 may be formed of composite materials, glass fibers, fabric, Kevlar with resin, paper, or other suitable materials. The cover 28 may comprise a breakable line 32 to allow the airbag 12 to deploy through the cover 28. The breakable line 32 may be formed by partially cutting or otherwise weakening an area of the cover 28 in a shape that allows the airbag 12 to correctly deploy. The breakable line 32 may have any position on the cover 28 relative to the container 20 and may have a T-shape, H-shape, I-shape, C-shape, U-shape, or any other suitable shape.

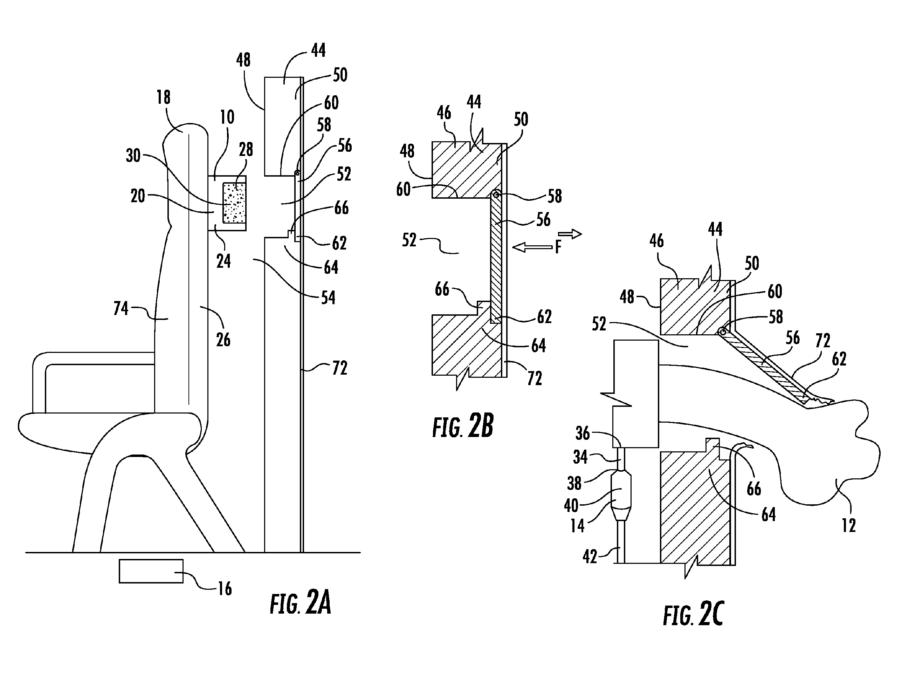

As illustrated in Figures 2C, a gas hose 34 may be coupled to a port 36 in the airbag 12 and to a port 38 of the inflator 14. In some features, the gas hose 34 may be integrally formed with the airbag 12 and/or the inflator 14. In other features, the gas hose 34 may be coupled to the airbag 12 and/or the inflator 14 via any suitable mechanical or chemical fasteners including but not limited to adhesives, adhesion welding, or other suitable fastening methods. In yet other features, the inflator 14 may be coupled directly to the airbag 12 without the need for the gas hose 34.

The inflator 14 may further comprise a canister 40. The canister 40 may be a high pressure gas vessel or other suitable container designed to withstand application of pressure up to 600 bar. The canister 40 may further comprise helium gas or any inert gas to rapidly inflate the airbag 12. However, one of ordinary skill in the relevant art will understand that any suitable chemical composition may be included within the canister 40 that produces a gas that rapidly inflates the airbag 12 within the required time period. A firing module 42 may be coupled to the inflator 14. The firing module 42 may include a pyrotechnic squib that will break a membrane in order to release the pressurized gas.

In certain features, the sensing circuit 16 may comprise integrated logic to monitor for crash scenarios and to transmit a signal to the inflator 14 when such a scenario is detected. When the inflator 14 receives the signal from the sensing circuit 16, the inflator 14 deploys the airbag 12. The sensing circuit 16 may include a battery for reserve power and inflator firing charge capability. The sensing circuit 16 may be electrically connected to the firing module 42 of the inflator 14. For example, the sensing circuit 16 may be an electronics module assembly ("EMA") or other suitable electronics control module.

In some features, as illustrated in Figures 2A, 5, and 6, the aft surface 26 of the seat back 18 may be positioned adjacent a structure 44. Typical structures may include seat monuments, class dividers, closets, cabinets, bulkheads, furniture, rigid partitions, or other similar structures. The structure 44 may comprise an internal material 46, such as a honeycomb or other suitable structure that may provide sufficient strength and support for the structure 44, which is sandwiched between a forward surface 48 and an aft surface 50.

In certain features, such as those illustrated in Figures 2A-2C, 5, and 6, a recess 52 may be formed within the structure 44 by removing a portion of at least the forward surface 48 and the internal material 46. The recess 52 may serve to guide the airbag 12 through the structure 44 in a deployed state. The recess 52 may also be shaped to receive and/or mate with the airbag module 10 attached to the aft surface 26 of the seat back 18, as illustrated in Figures 2A-2C.

In certain features, the airbag module 10 may be configured to be positioned within a space 54 located between the seat back 18 and the structure 44. The space 54 may be included between the seat back 18 and the structure 44 so that the structure 44 does not interfere with a reclined position of the seat back 18. By locating the airbag module 10 within the space 54, as opposed to within the structure 44, the structure 44 may have a thinner shape than would otherwise be needed to house the airbag module 10. In certain features, to prevent the position of the airbag module 10 from interfering with the reclined position of the seat back 18, the recess 52 may be shaped so that the airbag module 10 is received at least partially within the recess 52 when the seat back 18 is in the reclined position.

In some cases, the aft surface 50 adjacent the recess 52 may be configured to include a breakable area 56 to allow the airbag 12 to deploy from the airbag module 10 through the recess 52 and through the aft surface 50. As best illustrated in Figures 2B-2C, the breakable area 56 may be configured so that the breakable area 56 opens in an aft direction from the force of the airbag 12 deployment, but has sufficient strength or configuration to resist opening in a forward direction so as to provide a resilient surface for normal cabin usage.

In some features, the breakable area 56 may be formed by partially cutting or otherwise weakening the aft surface 50 locally in a shape that substantially corresponds to the shape of the recess 52, a T-shape, H-shape, I-shape, C-shape, U-shape, or any other suitable shape that allows the airbag 12 to correctly deploy. The breakable area 56 may retain sufficient strength to withstand ordinary wear and tear usage, while also being configured to break quickly when the airbag 12 is deployed. For example, the breakable area 56 may be formed of composite materials, glass fibers, fabric, Kevlar with resin, or other suitable materials.

In these features, as illustrated in Figures 2A-2C and 3-4, the breakable area 56 may be configured to be weaker on one side and stronger on an opposing side, wherein a first end 58 of the breakable area 56 may be pivotally coupled to an upper portion 60 of the aft surface 50. In certain features, the first end 58 of the breakable area 56 may be adhered, bonded, sewn, mechanically coupled, or otherwise joined to the upper portion 60. A second end 62 of the breakable area 56 may be positioned adjacent a lower portion 64 of the aft surface 50. A stop 66 may be positioned within the recess 52 adjacent the lower portion 64 so as to prevent the second end 62 of the breakable area 56 from rotating forward past the stop 66 under typical cabin usage conditions.

Conversely, the second end 62 of the breakable area 56 may be pivotally coupled to the lower portion 64 of the aft surface 50. In certain features, the second end 62 of the breakable area 56 may be adhered, bonded, sewn, mechanically coupled, or otherwise joined to the lower portion 64. The first end 58 of the breakable area 56 may be positioned adjacent the upper portion 60 of the aft surface 50. The stop 66 may be positioned within the recess 52 adjacent the upper portion 60 so as to prevent the first end 58 of the breakable area 56 from rotating forward past the stop 66 under typical cabin usage conditions.

In certain features, the first end 58 and/or the second end 62 of the breakable area 56 may be adhered, bonded, sewn, mechanically coupled, or otherwise joined to the upper portion 60, the lower portion 64, or any other suitable location on the aft surface 50. In other features, both the first end 58 and the second end 62 (and/or one or both sides 68) of the breakable area 56 may be pivotally or otherwise coupled to the upper portion 60 and/or the lower portion 64 (and/or sides 70) of the aft surface 50, and the breakable area 56 may include a weakened area centrally located between the ends 58, 62 (and/or sides 68) of the breakable area 56. However, one of ordinary skill in the relevant art will understand that the breakable area 56 may have any suitable design and/or position that allows the airbag 12 to deploy without interference.

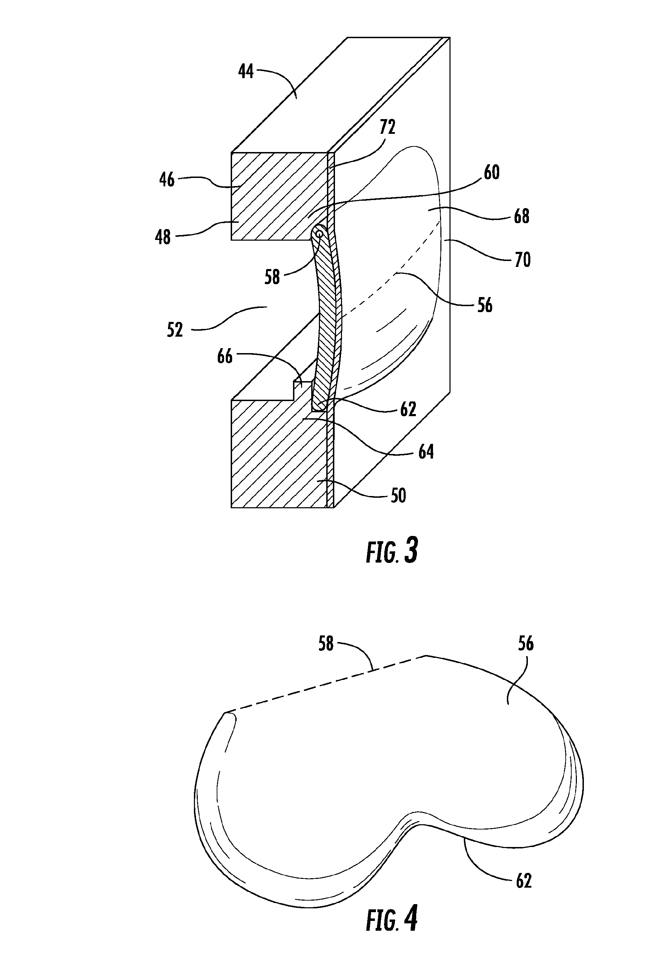

In certain features, as illustrated in Figures 2A-2C and 3, the entire aft surface 50 and/or the area substantially covering the breakable area 56 and/or a portion of the aft surface 50 surrounding the breakable area 56 may be covered by a film 72, such as polymers, polyethylene, polypropylene, polyester, nylon, vinyl, bioplastics, gels, silicone, wax, latex, resins, enamels, or other suitable coatings that may obscure the visibility or alter the appearance of the breakable area 56 for aesthetic purposes without mechanically interfering with the operation of the breakable area 56 when the airbag 12 is deployed.

In additional features, such as those illustrated in Figure 4, the breakable area 56 may be integrated into the aft surface 50 in a decorative pattern or other aesthetically appealing design that does not require application of the film 72 to disguise the breakable area 56. In these features, one end 58, 62 or side 68 of the breakable area 56 may be more strongly coupled to the aft surface 50, while the other end 58, 62 or side 68 may be less strongly coupled to the aft surface 50 so that the weaker coupling will break free from the aft surface 50 when the airbag 12 is deployed.

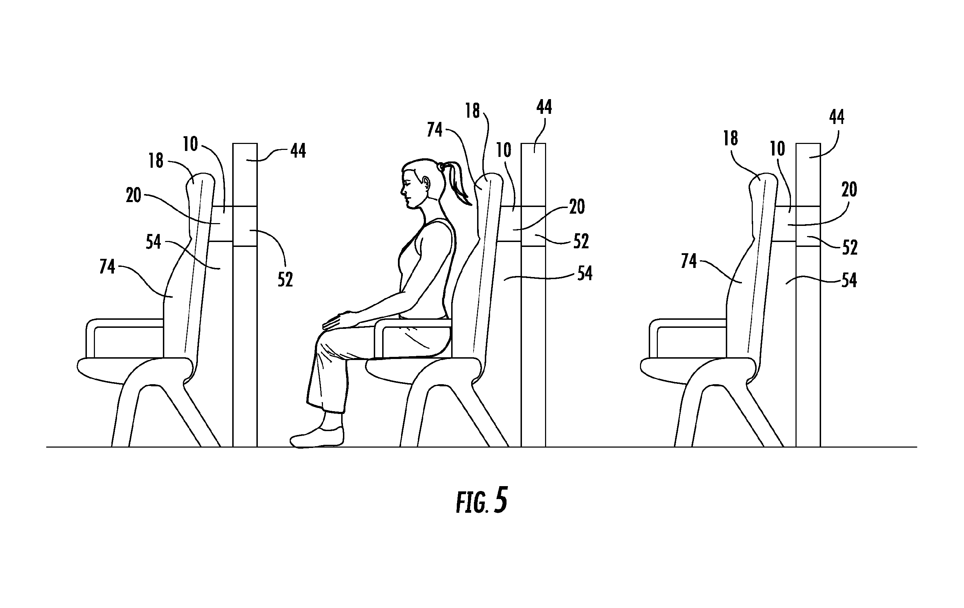

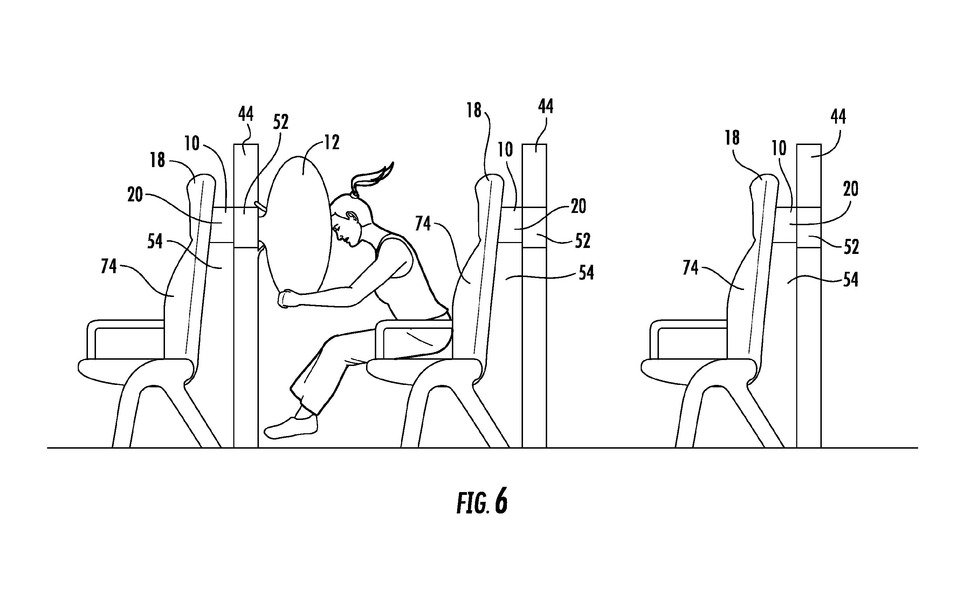

Figure 5 illustrates certain features of the airbag module 10 in combination with various passenger seats 74 and structures 44 during normal operation. Figure 6 illustrates certain features of the airbag module 10 in combination with various passenger seats 74 and structures 44 during a minor crash. In these features, when the sensing circuit 16 detects that a crash has occurred, the sensing circuit 16 sends a signal to the inflator 14, which in turn causes the airbag 12 to deploy through the cover 28, wherein the force of the airbag 12 deployment causes the breakable line 32 to form an opening in the cover 28. The airbag 12 then deploys through the recess 52, wherein the force of the airbag 12 deployment causes the breakable area 56 to form an opening in the aft surface 50. The airbag 12 then fully deploys aft of the structure 44 so that a passenger's head contacts the airbag 12, instead of the structure 44.

The foregoing is provided for purposes of illustrating, explaining, and describing features of the present invention. Further modifications and adaptations to these features will be apparent to those skilled in the art and may be made without departing from the scope of the invention.

## Claims

1. An airbag module for a passenger seat comprising:
(a) a seat back (18);
(b) a container (20) coupled to the seat back, wherein the container comprises at least one airbag (12) in an undeployed state; and
(c) a structure (44) positioned aft of the seat back, wherein the structure comprises a recess or opening (52) configured to receive the at least one airbag in a deployed state.

2. The airbag module of claim 1, wherein:
(a) the structure (44) comprises an aft surface (50):
(b) wherein the aft surface comprises a breakable area (56); and,
(c) the breakable area is configured open in an aft direction when a force is applied by the at least one airbag in a deployed state.

3. The airbag module of claim 2, wherein the recess (52) is positioned adjacent the breakable area (56).

4. The airbag module of claim 2 or claim 3, wherein the breakable area (56) is pivotally (58) coupled to a portion (60) of the aft surface (50) of the structure (44).

5. The airbag module of claim 4, wherein the recess (52) comprises a stop (66) to prevent the breakable area (56) from rotating forward past the stop.

6. The airbag module of any of claim 2 to 5, wherein the structure (44) further comprises a film (72) that is positioned to cover at least the breakable area (56).

7. The airbag module of any of claims 2 to 6, wherein the breakable area (56) comprises a decorative pattern on the aft surface (50) of the structure (44).

8. The airbag module of any of claims 1 to 7, wherein the recess or opening (52) is configured to guide the at least one airbag (12) in the deployed state through the structure (44).

9. The airbag module of any of claims 1 to 8, wherein the airbag module (10) is configured to be positioned within a space (54) located between the seat back (18) and the structure (44).

10. The airbag module of any of claims 2 to 8, wherein the breakable area (56) is configured to resist opening in a forward direction; so as to provide a resilient surface for normal cabin usage.

11. A passenger seat incorporating an airbag module (10) as claimed in any of claims 1 to 10.

12. A structure comprising a recess or opening (52) configured to receive at least one airbag (12) as claimed in any of claims 1 to 10.
